# EUROPEAN PATENT APPLICATION

(11) **EP 3 043 100 A1**
(43) Date of publication of application: **13.07.2016**
(21) Application number: 14842051.6
(22) Date of filing: 03.09.2014
(51) Int. Cl.: F16L 21/08, F16L 41/06, F16L 13/02

(54) **PIPE CONNECTOR FOR CONNECTING WELDING JOINT**

(30) Priority: 06.09.2013 KR 20130107068
(71) Applicant: Jeong Woo Coupling Co., Ltd., Gimhae-si, Gyeongsangnam-do 621-813 (KR)
(72) Inventor: YOO, In tai, Busan 608-784 (KR)
(74) Representative: Staudt, Hans-Peter
(86) International application number: PCT/KR2014/008279
(87) International publication number: WO 2015/034267

(57) **Abstract**

A pipe connector for connecting two pipes is provided. In the pipe connector, a projection ring is circumferentially formed on an inner circumference of a rubber sleeve at a position, which is spaced a distance from one inlet of the pipe connector, such that a connection end of the pipe inserted into the pipe connector comes into contact with and is held by the projection ring. The casing and an auxiliary casing are provided, on opposite ends thereof, with stopper bends, a width of which is as much as 1.2~2 times a thickness of a grip ring.

## Description

### Technical Field

The present invention generally relates to a pipe connector for connecting a welding joint, such as a 90° elbow joint or a tee, and a straight pipe. More particularly, the present invention relates to a pipe connector for connecting a welding joint, such as a 90° elbow joint or a tee, and a straight pipe, in which stopper bends are formed to be bent inwardly from openings on both sides of a casing of the pipe connector and to have a narrow width as much as 1.2∼2 times the thickness of a grip ring, and a projection ring is formed so as to allow a connection end of the welding joint to be accurately inserted in place into the inner circumference of a rubber sleeve installed in the inner circumference of the casing of the pipe connector, whereby when connecting the welding joint and the straight pipe by the pipe connector, the connection end of the welding joint curved into an arc shape is inserted as deeply as possible into the inside of the pipe connector, and the grip ring is sufficiently held in a connection part of the welding joint, so that the straight pipe and the welding joint can be stably connected by the pipe connector.

### Background Art

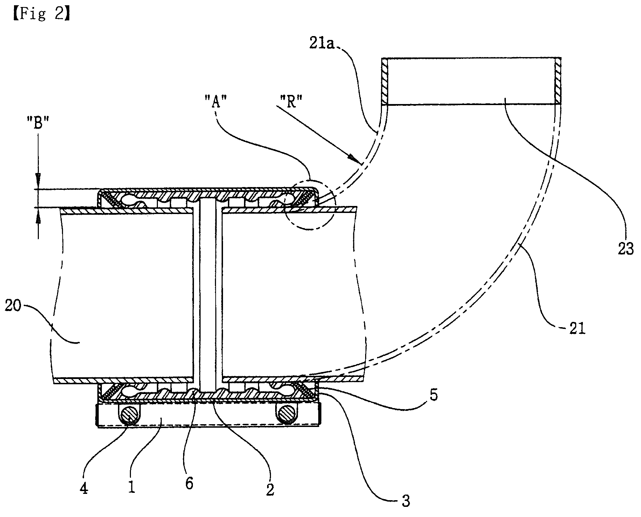

Generally, as illustrated in FIG. 2, a piping connector 1 (also referred to as a "pipe connector") is used to surround and connect two pipes (including a straight pipe 20 and a welding joint 21), through which fluid flows, without welding them.

Such pipe connectors are disclosed in many documents, such as Korean Utility Patent Model No. 20-0363185 (entitled "pipe connectors") assigned by the Applicant. However, such conventional pipe connectors 1 have problems in that they cannot connect a curved connection end of a welding joint, such as a 90° elbow joint and a tee, but only connect straight pipes.

The reason why the pipe connectors 1 cannot connect the welding joint itself is as follows. As illustrated in FIG. 2, a width B of the stopper bends 3 inwardly bent at opposite openings of a casing 2 of the pipe connector is wide, so, when the welding joint such as a 90° elbow joint is inserted into the pipe connector 1, an inwardly curved part 21a of the welding joint 21 is engaged with the stopper bend 3. Thus, a connection end of the welding joint 21 cannot be inserted deeper into the pipe connector 1.

Since the connection end of the welding joint 21 cannot be inserted deeper into the pipe connector 1, when the pipes (including the welding joint 21 and the straight pipe 20) are connected by fastening and tightening the casing 2 with clamping bolts 4, a clamping area of the connection end of the welding joint 21 engaged by the pipe connector 1 is reduced.

When the connection end of the welding joint 21 is not inserted deeper into the pipe connector 1, a clamping force becomes weaker, and the connection end of the welding joint does not come into contact with the grip ring 5 serving to prevent pipes from being decoupled from the pipe connector 1. Thus, such a conventional pipe connector 1 cannot connect a curved welding joint 21 such as a 90° elbow joint.

To solve this problem of difficulty of the curved welding joint 21 itself being connected by the pipe connector 1, a short pipe section 23 is additionally welded to the connection end of the welding joint 21 in order to allow the extended connection end to be inserted into the pipe connector 1. To this end, however, additional machining is required, so productivity decreases.

The welding joint used herein refers to a connection pipe, such as a 90° elbow or a tee, in which a flange-free connection end thereof is curved into an arc shape. An elbow-type welding joint illustrated in FIG. 2 is an exemplary welding joint formed from a metal pipe in which inner and outer parts thereof are curved at 90° about the same center point.

### Disclosure

### Technical Problem

Accordingly, the present invention has been made keeping in mind the above problems occurring in the related art, and an object of the present invention is to provide a pipe connector for connecting a welding joint, such as a 90° elbow joint or a tee, and a straight pipe, in which stopper bends are formed to be bent inwardly from openings on both sides of a casing of the pipe connector and to have a narrow width as much as 1.2-2 times the thickness of a grip ring, and a projection ring is formed so as to allow a connection end of the welding joint to be accurately inserted in place into the inner circumference of a rubber sleeve installed in the inner circumference of the casing of the pipe connector, whereby when connecting the welding joint and the straight pipe by the pipe connector, the connection end of the welding joint curved into an arc shape is inserted as deeply as possible into the inside of the pipe connector, and the grip ring is sufficiently held in a connection part of the welding joint, so that the straight pipe and the welding joint can be stably connected by the pipe connector.

### Technical Solution

In order to accomplish the above object, the present invention provides a pipe connector for connecting two pipes in a non-welding method, the pipe connector including: a casing formed into a cylindrical pipe as an external shape of the pipe connector and having a longitudinal cutout section; an auxiliary casing, one end of which is fixedly installed to one end of the casing of the pipe connector to cover the cutout section of the casing of the pipe connector; a clamp member mounted between opposite ends of the casing about the cutout section to allow the casing to contract, the clamp member having a clamping bolt to pull the opposite ends towards each other into the cutout section; a rubber sleeve mounted on an inner circumference of the casing to surround outer surfaces of the pipes to be connected; and a pair of grip rings conically mounted on opposite inlets of the casing of the pipe connector, wherein an inwardly protruding projection ring is circumferentially formed on an inner circumference of the rubber sleeve at a position, which is spaced a distance from one inlet of the pipe connector, such that a connection end of the pipe inserted into the pipe connector comes into contact with and is held by the projection ring, and wherein the casing and the auxiliary casing are provided, on opposite ends thereof, with inwardly bent stopper bends, a width of which is as much as 1.2~2 times a thickness of the grip ring.

### Advantageous Effects

According to the present invention, with the configurations in which the projection ring is formed on the inner circumference of the rubber sleeve and in which the width of the stopper bend is minimized, the connection end of the welding joint can be correctly inserted into the pipe connector along the same center line as that of a straight pipe, and the connection end of the welding joint can be inserted as deeply as possible into the pipe connector, thereby firmly and stably connecting the curved welding joint.

Further, according to the present invention, the adjacent pipe connectors respectively mounted to a set of pipes, including the welding joint, are connected by the spacer member, allowing the respective pipe connectors to be held in place, thereby completely blocking fluid leakage from the pipes connected by the pipe connectors.

### Description of Drawings

FIG. 1 is a perspective view illustrating a conventional pipe connector;
FIG. 2 is a cross-sectional view illustrating the pipe connector being mounted to connect pipes;
FIGS. 3(a), 3(b), and 3(c) are enlarged cross-sectional views illustrating embodiments of section "A" in FIG. 2;
FIG. 4 is a cross-sectional view illustrating a pipe connector according to the present invention being adapted to connect pipes;
FIG. 5 is a cross-sectional view illustrating the pipe connector;
FIGS. 6(a) and 6(b) are views illustrating an embodiment of a spacer member as a major element of the pipe connector being connected to the pipe connector;
FIGS. 7(a) and 7(b) are views illustrating another embodiment of a spacer member as a major element of the pipe connector being connected to the pipe connector; and
FIGS. 8(a) and 8(b) are views illustrating the spacer member illustrated in FIG. 7.

### Best Mode

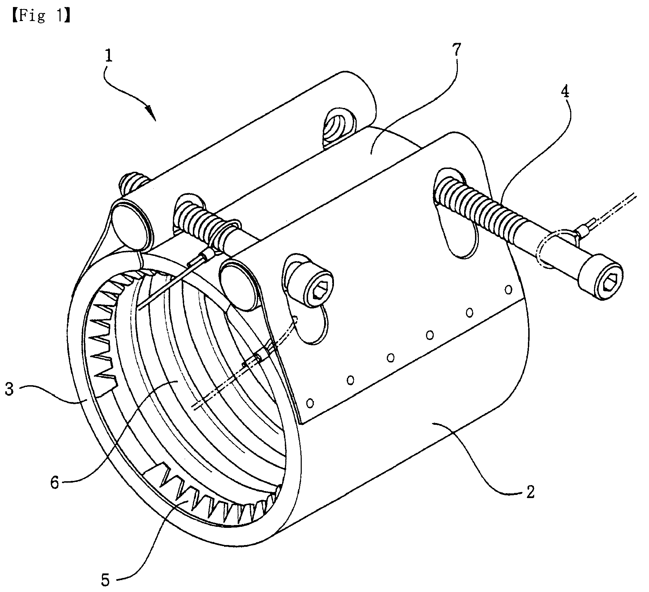

A pipe connector for connecting a welding joint will now be described with reference to FIGS. 1 and 3 to 8.

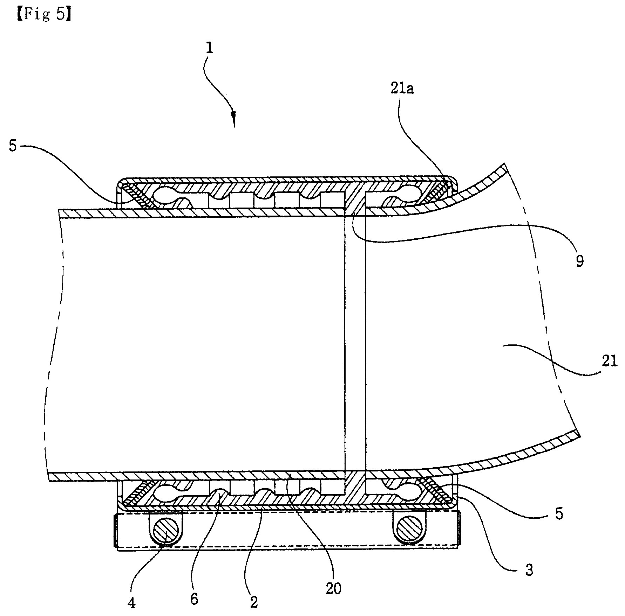

As illustrated in FIGS. 1 and 5, a pipe connector 1 is a connector that connects two pipes in a non-welding method, and generally includes a casing 2 forming an external shape of the pipe connector, an auxiliary casing 7 installed in a cutout section of the casing 2 of the pipe connector, a clamp member mounted between opposite ends of the casing 2 about the cutout section to allow the casing to contract, wherein the clamp member has clamping bolts 4 to pull the opposite ends towards each other into the cutout section, a rubber sleeve mounted on an inner circumference of the casing, and grip rings 5 conically mounted on opposite inlets of the pipe connector.

The casing 2 of the pipe connector is formed like a pipe, opposite ends of which are bent inwards to form stopper bends 3 and which has a longitudinal cutout section with a certain width. Here, the casing 2 of the pipe connector may be fabricated by bending a metal plate into a cylindrical pipe while leaving a cutout section in the longitudinal direction. Thus, an outer diameter of the casing 2 may be adjusted to be smaller by adjusting the width of the cutout section.

The auxiliary casing 7 is provided to cover the longitudinal cutout section of the casing. Like the casing 7, the auxiliary casing also has inwardly bent stopper bends on opposite ends at the same positions as those of the casing 2. One end of the auxiliary casing 7 is fixed to an inner surface of one end of the casing 2.

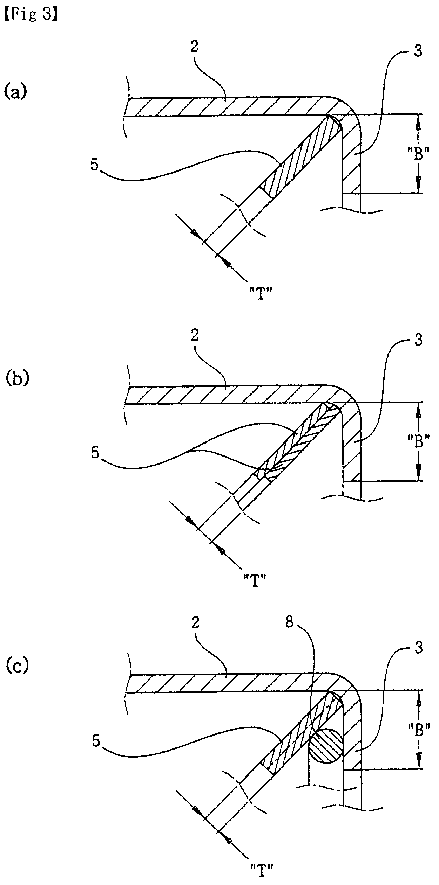

As illustrated in FIGS. 3 and 5, the grip rings 5 are mounted in three mounting types to clamp outer surfaces of pipes (a straight pipe 20 and a welding joint 21), which are inserted and connected into the inside of the pipe connector 1 in an inclined direction.

Specifically, FIG. 3(a) illustrates the mounting of a single grip ring 5, FIG. 3(b) illustrates the mounting of two overlapped grip rings 5, and FIG. 3(c) illustrates the mounting of one or two grip rings 5 and a support ring 8 provided on a rear side of the grip ring to support the same.

A thickness "T" of the single grip ring 5 mounted as illustrated in FIG. 3 (a) is selected to be the same as or similar to a thickness "T" of the two overlapped grip rings 5 as illustrated in FIG. 3 (b) . This is because to grip same size pipes requires a same or similar clamping force.

Although, if formed of a hard, rigid material, the single grip ring 5 of FIG. 3 (a) may be made thinner, a reduction in the thickness is not considerable. It is thus assumed that the thickness of the single grip ring illustrated in FIG. 3(a) is substantially the same as that of the two overlapped grip rings 5 illustrated in FIG. 3(b).

In addition, it is also assumed that a thickness "T" of a single grip ring or two-overlapped grip rings 5 mounted as illustrated in FIG. 3(c) is substantially the same as that of the single grip ring of FIG. 3(a). It is thus noted that the thicknesses of the grip ring(s) illustrated in FIGS. 3(a), 3(b), and 3(c) are assumed to be the same.

According to the present invention, the pipe connector 1 is characterized by minimized widths "B" of the stopper bends 3 of the pipe connector 1 as illustrated in FIGS. 3 and 5 to allow connection ends of a welding joint 21, such as an elbow joint curved at 90 degrees, to be inserted as deeply as possible into the inside of the pipe connector 1.

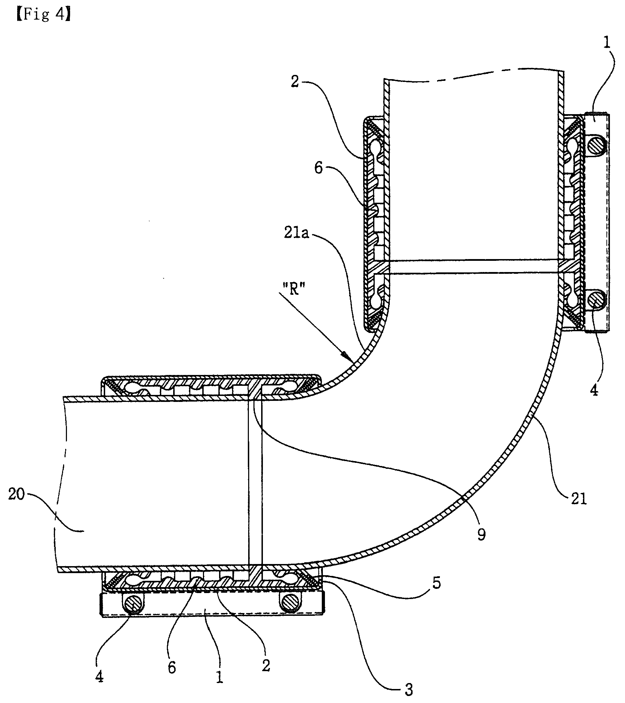

Further, as illustrated in FIGS. 4 and 5, the pipe connector of the present invention is characterized by a projection ring 9 on an inner circumference of the rubber sleeve 6 to allow a bent connection end of a welding joint 21 to be inserted into the inside of the pipe connector 1 in an aligned manner.

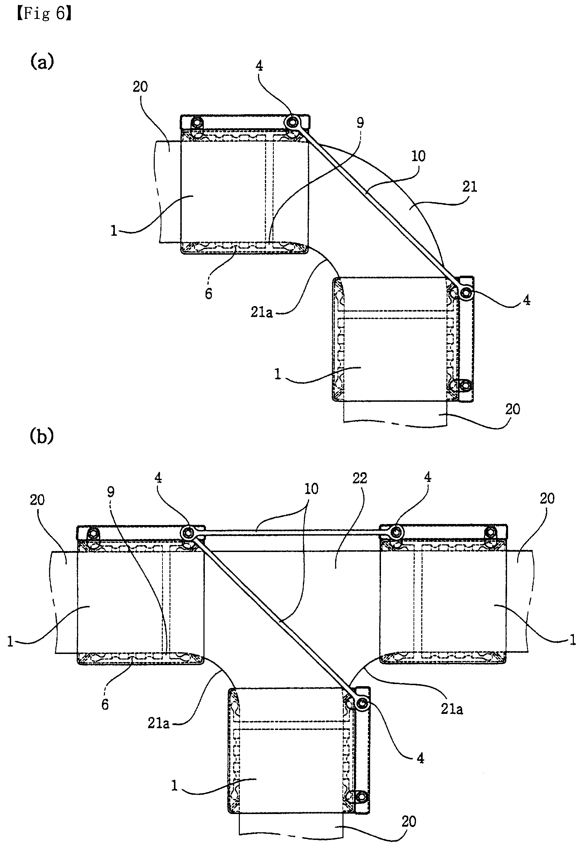

Yet further, as illustrated in FIG. 6, the pipe connector of the present invention is characterized by a spacer member 10 composed of a wire or an iron plate band and mounted between adjacent pipe connectors 1 mounted to the same pipe to allow that pipe to be stably connected by the adjacent pipe connectors 1.

First, a description will be made of the first feature to minimize the widths "B" of the stopper bends 3. Here, the grip ring 5 or grip rings 5 illustrated in FIGS. 3(a), 3(b), and 3(c) are assumed to be a single integrated grip ring having a thickness "T".

In the case illustrated in FIGS. 3(a) and 3(b), the width "B" of the stopper bend 3 is made to have a width as much as 1.2~2 times the thickness T of the grip ring 5. In addition, in the case illustrated in FIG. 3(c), the width "B" of the stopper bend 3 is made to have a width as much as 1.2~2 times a total thickness of the grip ring 5 and the support ring 8.

For reference, FIG. 3 is an enlarged view of section "A" of FIG. 2 illustrating the conventional pipe connector, wherein the stopper bends 3 have a wide width. The present invention also has a similar configuration about the section "A" to the above conventional configuration, except narrow widths of the stopper bends, so a relevant configuration of the present invention will also be described with reference to FIG. 3.

**Table 1**

| Standards (Inner Diameter) of Pipe Connector (mm) | Thickness of Grip Ring (mm) | Width (B) of Stopper Bend (mm) | |
|---|---|---|---|
| | | Related Art | Present Invention |
| 15A~40A | 2.0 | 5.5 | 2.4-4.0 |
| 50A~65A | 2.4 | 6.5 | 2.88-4.8 |
| 80A~150A | 3.0 | 8.5 | 3.6-6.0 |
| 200A∼400A | 3.0 | 10 | 3.6-6.0 |

Table 1 shows configurations of a pipe connector in which grip ring is only mounted as illustrated in FIGS. 3 (a) and 3(b), wherein, in the pipe connector 1 connecting a pipe (including a welding joint) having an outer diameter of 15 mm, a thickness of the grip ring 5 is 2.0 mm, and a width of the stopper bend 3 preferably ranges from 2.4 mm to 4.0 mm, which is as much as from 1.2 to 2 times the thickness of the grip ring 5.

An exemplary case of a smallest pipe connector (an inner diameter of 15 mm: standard 15A) to connect a pipe having an outer diameter of 15 mm will be described. Here, since a thickness of the grip ring 5 mounted inclined to the 15 mm pipe connector 1 is 2.0 mm, the stopper bend 3 may have a minimum width of 2.0 mm in order to allow an outer circumference of the grip ring 5 to be held by the stopper bend. Here, since pipe connectors of standards 15A to 65A are formed from a 1 mm-thickness stainless plate, to form a stopper bend by bending the 1 mm-thickness stainless plate into a bend of 2 mm or less is not desirable in terms of workability and strength. This is the reason why to determine a minimum magnification factor of the thickness of the grip ring to be 1.2 so as to obtain a 2.4 mm minimum width of the stopper bend for the 15 mm pipe connector 1.

Further the reason why to determine a maximum magnification factor to be 2 so as to obtain a maximum width of the stopper bend 3 that is 2 times the thickness of the grip ring 5 is because, in such case, a connection end of a curved welding joint 21 may be sufficiently inserted into the pipe connector while the outer circumference of the grip ring 5 may be sufficiently held by the stopper bend 3, and the casing 2 of the pipe connector may have advantageous strength.

As shown in Table 1, in the case of a 15 mm pipe connector 1, the present invention has a 2.4 mm~4.0 mm width of the stopper bend that is reduced from a 5.5 mm width of a conventional stopper bend by 1.0 mm∼3.1 mm, leading to a reduction of maximum 56.1 %, thereby allowing the connection end of the curved welding joint 21 to be sufficiently deeply inserted into the pipe connector 1.

**Table 2**

| Standards (Inner Diameter) of Pipe Connector (mm) | Thickness of (Grip Ring + Support Ring) (mm) | Width (B) of Stopper Bend (mm) | |
|---|---|---|---|
| | | Related Art | Present Invention |
| 15A~40A | 2.0+2.0=4.0 | 10 | 4.8~8.0 |
| 50A~65A | 2.4+2.0=4.4 | 13 | 5.28~8.8 |
| 80A~150A | 3.0+2.5=5.5 | 20 | 6.6~11.0 |
| 200A∼400A | 3.0+3.0=6.0 | 30 | 7.2~12 |

Table 2 shows configurations of the pipe connector in which the grip ring 5 and the support ring 8 are mounted together as illustrated in FIG. 3(c). Here, in the case of a pipe connector 1 connecting a pipe (including a welding joint) having an outer diameter of 15 mm, a total thickness of the grip ring 5 and the support ring 8 is 4.0 mm, so, even when a width of the stopper bend 3 is formed to be 4.8 mm at minimum, the width is greater than the total thickness of 4.0 mm, allowing the grip ring 5 and the support ring 8 to be sufficiently held and supported by the stopper bend.

Further, in the case of a pipe connector 1 having an inner diameter of 15 mm to connect the grip ring 5 and the support ring 8 together, even when the width of the stopper bend 3 is formed to be 8.0 mm at maximum, the width is smaller than a 10 mm width of a conventional stopper bend by 2.0 mm. In addition, in the case of a pipe connector of standard 200A, when a width of the stopper bend is formed to be 7.2 mm at minimum, the width is reduced from a 30 mm width of a conventional stopper bend by 22.8 mm, allowing a connection end of a curved welding joint 21 to be sufficiently deeply inserted into the pipe connector 1.

When the clamping bolts 4 are fastened in a state in which the connection end of the welding joint 21 has been inserted into the pipe connector more deeply, a straight pipe 20 and a welding joint, such as a 90° elbow joint, may be stably connected.

Subsequently, the second feature of the pipe connector according to the present invention will be described. As illustrated in FIGS. 4 and 5, the projection ring 9 is formed on the inner circumference of the rubber sleeve 6 on the side toward which the connection end of the welding joint 21 is inserted to allow the connection end of the welding joint 21 to be held by the projection ring.

Here, the projection ring 9 is circumferentially formed at a position, which is spaced a distance from one inlet of the pipe connector 1, whereby, in the case in which the welding joint 21 is a 90° elbow joint, a connection end of the welding joint, bent at a right angle, is correctly inserted into the pipe connector.

Subsequently, the third feature of the pipe connector according to the present invention will be described. As illustrated in FIG. 6, the spacer member 10 is mounted between adjacent pipe connectors 1 connecting a straight pipe 20 and a welding joint 21 in order to prevent the adjacent pipe connectors 1 from being separated from each other, thereby maintaining the connection therebetween.

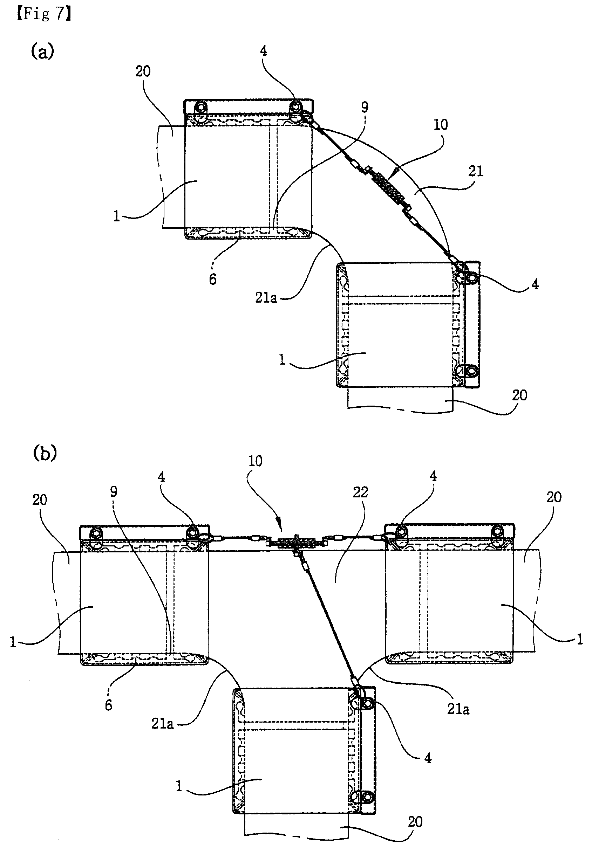

The spacer member is formed from an iron wire or an iron plate band, and, as illustrated in FIGS. 6 and 7, the spacer member is mounted to the casing 2 of the pipe connector such that opposite ends thereof are respectively hooked and coupled to opposite clamping bolts 4 mounted to the casing 2.

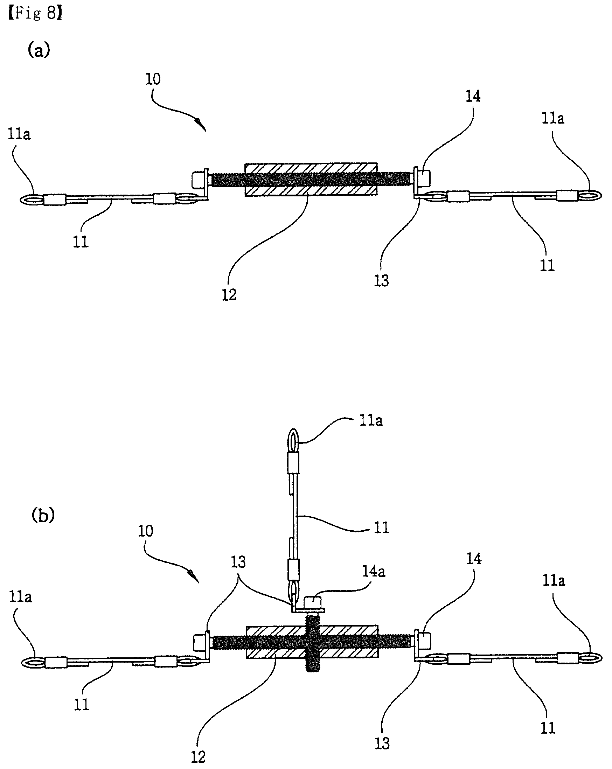

FIGS. 8(a) and 8(b) illustrate another embodiment of a spacer member 10. In FIG. 8(a), the spacer member 10 is configured to include a screw pipe 12 having an internal screw part on an inner circumference thereof, screws 12 respectively screwed through opposite sides of the screw pipe via brackets 13 so that heads of the screws are abutted against the brackets, and wire parts 11 respectively provided on opposite outer sides of the brackets, wherein the wire part has hook portions 11a on opposite outer ends thereof.

Further, in FIG. 8(b), the spacer member 10 is further provided with another screw 14a that is vertically fastened through the screw pipe 12 via another bracket against which a head of the screw 14a is abutted. Wire parts 11 are respectively connected to outer ends of the brackets 13. The wire part is provided with hook portions 11a on opposite outer ends thereof.

Although the wire part 11 of the spacer member 10 illustrated in FIGS. 6 to 8 is formed from a flexible iron wire, the wire part may be formed from an iron plate band.

The operative correlation of the pipe connector having the above-mentioned configuration will be described with reference to FIGS. 1 to 8.

As illustrated in FIGS. 1, 4, and 5, when a straight pipe 20 and a 90° elbow-type welding joint 21 or a tee-type welding joint 22 are connected by the pipe connector 1, the clamping bolts provided to fasten the opposite ends of the casing 2 about the cutout section are unfastened, so that the cutout section is enlarged from the opposite ends of the casing 2 of the pipe connector formed from a metal plate (a stainless plate). In this state, ends of a straight pipe and a welding joint to be inserted can be inserted into the inside of the rubber sleeve 6 in the casing 2 of the pipe connector.

When the ends of the straight pipe 20 and the welding joint 21 or 22 are inserted into the rubber sleeve 6 as described above, ends of the straight pipe 20 and the welding joint 21 or 22 are respectively inserted into opposite sides of the pipe connector 1 such that the ends of the straight pipe 20 and the welding joint 21 or 22 come into contact with the projection ring 9 formed on the inner circumference of the rubber sleeve 6.

Since the projection ring 9 is formed on the inner circumference of the rubber sleeve 6 to protrude inwards perpendicularly to the outer circumference of the casing 2 of the pipe connector, when oppositely closely abutted against the projection ring 9, the ends of the straight pipe 20 and the welding joint 21 or 22 are inserted into the pipe connector along the same center line.

In this state, when the clamping bolts 4 are fastened from the opposite ends of the casing 2 about the cutout section, the auxiliary casing 7 as well as the casing 2, the rubber sleeve 6, the grip rings 5, and the support ring 8, which are surrounded by the casings, become contracted to tighten and connect the ends of the straight pipe 20 and the welding joint 21 or 22.

Like this, when the straight pipe 20 and the welding joint 21 or 22 are connected by fastening the clamping bolts 4, the ends of the straight pipe 20 and the welding joint 21 or 22 are respectively connected along the same center line. Here, since the end of the welding joint 21 or 22, an insertion depth of which is not deeper than that of the straight pipe 20, is inserted in an aligned state, the welding joint 21 can be firmly secured by correctly fastening the outer circumference of the end of the welding joint. Accordingly, the straight pipe 20 and the welding joint 21 or 22 can be stably connected.

Further, according to the present invention, as illustrated in Tables 1 and 2 and FIGS. 2 to 5, the width of the stopper bend 3 is made smaller than the related art. Thus, when the curved connection end of the welding joint 21 or 22 is inserted into the pipe connector 1, an inwardly curved part 21a of the connection end of the welding joint 21 or 22 is subjected to less interference from the stopper bend by a reduction in the width of the stopper bend. Thus, the connection end can be inserted deeper into the pipe connector 1 while maintaining the welding joint at a right angle relative to the pipe connector.

With the configuration to allow the connection end of the welding joint 21 or 22 to be inserted deeper into the pipe connector 1, when the connection ends of the straight pipe 20 and the welding joint 21 or 22 are respectively connected by the clamping bolts 4 in a state in which the connection end of the welding joint is inserted deeper, a clamping area of the connection end increases, thereby allowing the connection end of the welding joint 21 or 22 to be firmly clamped. Subsequently, a description will be made of the mounting of the spacer member 10, which is mounted between adjacent pipe connectors 1 that are mounted to a set of pipes, i.e. a straight pipe 20 and a welding joint 21 or 22, to connect the straight pipe and the welding joint, as illustrated in FIGS. 6 to 8.

In a state in which a set of a straight pipe 20 and a welding joint 20 or 21 is connected by the pipe connectors 1, when fluid flows through the welding joint 21 or 22 from the straight pipe 20 so that a fluid flow turns at 90°, flow resistance occurs in the welding joint 21 or 22 such as an elbow joint or a tee, causing a load to be exerted to decouple the welding joint from the pipe connectors 1.

The spacer member 10 is thus provided to connect the adjacent pipe connectors mounted to the set of the pipe and the welding joint in order to prevent the welding joint 21 or 22 from being decoupled from the pipe connectors 1.

FIG. 6 illustrates the case in which a spacer member 10, which is formed from an iron plate band, an iron wire, or a wire rope, is connected between adjacent pipe connectors 1. Here, it is effective that the spacer member 10 is mounted as tight as possible.

FIGS. 7 and 8 illustrate another embodiment of the spacer member 10, which further includes a tensioner at a middle portion of the spacer member connecting the adjacent pipe connectors 1 in order to regulate tension so that the spacer member 10 can be maintained to be continuously tightened. The spacer member 10 regulates tensions of opposite wire parts 11 with the same operative principle as in a known turnbuckle.

The spacer member 10 illustrated in FIGS. 7(a) and 8(a) is connected between pipe connectors 1 connected to opposite connection ends of a 90° elbow joint 21 such that respective hook portions 11a thereof are connected to certain portions of the pipe connectors 1. In this state, when the screws 14 on opposite sides of the screw pipe 12 are screwed, the tension of the spacer member 10 can be regulated according to the direction in which the screws are screwed.

The spacer member 10 illustrated in FIGS. 7(b) and 8(b) is connected between three pipe connectors 1 mounted to three connection ends of a tee-type welding joint 22. The three connection ends include two horizontal connection ends and one vertical connection end perpendicular thereto. In assembly, a horizontal component of the spacer member is first connected between the pipe connectors 1 respectively mounted to the set of horizontal connection, and then is tensioned by screwing the opposite screws 14.

Then, another screw 14a, which is vertically fastened to the screw pipe 12 of the spacer member in order to connect the vertical connection end, is screwed so that the wire parts 11 are drawn and tensioned. Thus, the "T"-type three pipe connectors 1 mounted to the three connection ends of the tee-type welding joint 22 are drawn and tensioned, leading to stable connections therebetween.

### Industrial Applicability

As described above, the present invention is applicable to a variety of industrial fields adopting a pipe connector for connecting a welding joint, such as a 90° elbow joint or a tee, and a straight pipe.

## Claims

1. A pipe connector for connecting two pipes in a non-welding method, the pipe connector comprising:
a casing formed into a cylindrical pipe as an external shape of the pipe connector and having a longitudinal cutout section;
an auxiliary casing, one end of which is fixedly installed to one end of the casing of the pipe connector to cover the cutout section of the casing of the pipe connector;
a clamp member mounted between opposite ends of the casing about the cutout section to allow the casing to contract, the clamp member having a clamping bolt to pull the opposite ends towards each other into the cutout section;
a rubber sleeve mounted on an inner circumference of the casing to surround outer surfaces of the pipes to be connected; and
a pair of grip rings conically mounted on opposite inlets of the casing of the pipe connector,
wherein an inwardly protruding projection ring is circumferentially formed on an inner circumference of the rubber sleeve at a position, which is spaced a distance from one inlet of the pipe connector, such that a connection end of the pipe inserted into the pipe connector comes into contact with and is held by the projection ring, and
wherein the casing and the auxiliary casing are provided, on opposite ends thereof, with inwardly bent stopper bends, a width of which is as much as 1.2∼2 times a thickness of the grip ring.

2. A pipe connector for connecting two pipes in a non-welding method, the pipe connector comprising:
a casing formed into a cylindrical pipe as an external shape of the pipe connector and having a longitudinal cutout section;
an auxiliary casing, one end of which is fixedly installed to one end of the casing of the pipe connector to cover the cutout section of the casing of the pipe connector;
a clamp member mounted between opposite ends of the casing about the cutout section to allow the casing to contract, the clamp member having a clamping bolt to pull the opposite ends towards each other into the cutout section
a rubber sleeve mounted on an inner circumference of the casing to surround outer surfaces of the pipes to be connected;
a pair of grip rings conically mounted on opposite inlets of the casing of the pipe connector; and
a pair of support rings respectively supporting rear sides of the grip rings,
wherein an inwardly protruding projection ring is circumferentially formed on an inner circumference of the rubber sleeve at a position, which is spaced a distance from one inlet of the pipe connector, such that a connection end of the pipe inserted into the pipe connector comes into contact with and is held by the projection ring, and
wherein the casing and the auxiliary casing are provided, on opposite ends thereof, with inwardly bent stopper bends, a width of which is as much as 1.2~2 times a total thickness of the grip ring and the support ring.

3. The pipe connector of claim 1 or 2, wherein a spacer member is connected between adjacent pipe connectors such that opposite ends thereof are respectively engaged with the clamping bolts mounted on the casings of the adjacent pipe connectors to prevent the adjacent pipe connectors from being separated from each other.
